# EUROPEAN PATENT APPLICATION

(11) **EP 4 495 278 A1**
(43) Date of publication of application: **22.01.2025**
(21) Application number: 23779363.3
(22) Date of filing: 08.03.2023
(51) Int. Cl.: C22B 1/20

(54) **METHOD FOR MANAGING OPERATION OF SINTERING MACHINE, METHOD FOR MANUFACTURING SINTERED ORE, AND CONTROL DEVICE**

(30) Priority: 28.03.2022 JP 2022051816
(71) Applicant: JFE Steel Corporation, Tokyo 100-0011 (JP)
(72) Inventor: IWAMI, Yuji, Tokyo 100-0011 (JP); HORITA, Kenya, Tokyo 100-0011 (JP); HIROSAWA, Toshiyuki, Tokyo 100-0011 (JP); HIGUCHI, Takahide, Tokyo 100-0011 (JP)
(74) Representative: Hoffmann Eitle
(86) International application number: PCT/JP2023/008931
(87) International publication number: WO 2023/189336

(57) **Abstract**

A method for managing operation of a sintering machine (30) includes acquiring raw material information, acquiring granulation conditions including a moisture content of sintering raw material when granulated particles are produced, estimating granulation results including a particle size of the granulated particles and a chemical composition at each particle size of the granulated particles based on the raw material information and granulation conditions, acquiring charging conditions for when a raw material charging layer is formed, estimating a particle size segregation and a component segregation of the granulated particles in the height direction of the raw material charging layer based on the granulation results and charging conditions, and acquiring guidance information including at least one setting value from among a mixing ratio of the carbon-containing raw material, a particle size of the carbon-containing raw material, the moisture content, a pallet speed, a sub-gate opening degree, and a chute angle.

## Description

### TECHNICAL FIELD

The present disclosure relates to a method for managing operation of a sintering machine, a method for manufacturing sintered ore, and a control unit.

### BACKGROUND

In sintering machine operation, charge segregation in the raw material charging layer is an important indicator for improving the yield in the upper part of the raw material charging layer.

However, to obtain information on segregation in the raw material charging layer, it is currently necessary to measure the raw material charging layer directly by methods such as sampling after the sintering machine is stopped. Therefore, the operation of the sintering machine is managed by determining how good the charge segregation is by looking at gas permeation data, the fire extinguishing conditions in the ore discharge section, and the like.

For example, Patent Literature (PTL) 1 discloses a method for estimating the particle size distribution of raw material in the height direction in the sintering raw material layer charged on the pallet of a sintering machine.

### CITATION LIST

### Patent Literature

### PTL 1: JP 2020-12185 A

### SUMMARY

### (Technical Problem)

PTL 1 asserts that the component at each particle size can be estimated if the potential matrix P is constant, i.e., if the particle size distribution of the target material (such as coke breeze) does not change. However, even if the coke breeze particle size distribution does not change, the component at each particle size varies greatly depending on other raw materials that are mixed in. In a case in which the mixing conditions of raw materials differ, the method disclosed in PTL 1 therefore cannot accurately estimate the distribution of raw materials in the height direction in the sintering raw material layer. Furthermore, the method in PTL 1 does not take into consideration the moisture content of the sintering raw material at the time of granulation, preventing estimation of the distribution of raw material in the height direction in the sintering raw material layer in a case in which the moisture content differs during granulation.

It is an aim of the present disclosure to provide a method for managing operation of sintering machine, a method for manufacturing sintered ore, and a control unit that can estimate particle size segregation and component segregation in the raw material charging layer even in a case in which the mixing conditions for the raw material or the moisture content during granulation differ.

### (Solution to Problem)

A method for managing operation of a sintering machine according to an embodiment of the present disclosure is
a method for managing operation of a sintering machine that sinters granulated particles produced by adding water to a sintering raw material including an iron-containing raw material and a carbon-containing raw material, the method including:
acquiring raw material information including a particle size, a chemical composition, and a mixing ratio of each raw material included in the sintering raw material;
acquiring granulation conditions including a moisture content of the sintering raw material when the granulated particles are produced from the sintering raw material;
estimating granulation results including a particle size of the granulated particles and a chemical composition at each particle size of the granulated particles based on the raw material information and the granulation conditions;
acquiring charging conditions for when the granulated particles are charged into the sintering machine to form a raw material charging layer;
estimating charging results by estimating a particle size segregation and a component segregation of the granulated particles in a height direction of the raw material charging layer based on the granulation results and the charging conditions; and
acquiring guidance information including a setting value for setting at least one of the particle size segregation and the component segregation as a target value, wherein
the guidance information includes at least one setting value from among a mixing ratio of the carbon-containing raw material, a particle size of the carbon-containing raw material, the moisture content, a pallet speed, a sub-gate opening degree, and a chute angle.

A method for manufacturing sintered ore according to an embodiment of the present disclosure includes manufacturing sintered ore using the aforementioned method for managing operation of a sintering machine.

A control unit according to an embodiment of the present disclosure is
a control unit for controlling a sintering machine that sinters granulated particles produced by adding water to a sintering raw material including an iron-containing raw material and a carbon-containing raw material, the control unit including:
a raw material information acquisition interface configured to acquire raw material information including a particle size, a chemical composition, and a mixing ratio of each raw material included in the sintering raw material;
a granulation condition acquisition interface configured to acquire granulation conditions including a moisture content of the sintering raw material when the granulated particles are produced from the sintering raw material;
a granulation result estimator configured to estimate granulation results including a particle size of the granulated particles and a chemical composition at each particle size of the granulated particles based on the raw material information and the granulation conditions;
a charging condition acquisition interface configured to acquire charging conditions for when the granulated particles are charged into the sintering machine to form a raw material charging layer;
a charging result estimator configured to estimate a particle size segregation and a component segregation of the granulated particles in a height direction of the raw material charging layer based on the granulation results and the charging conditions; and
a guidance information acquisition interface configured to acquire guidance information including a setting value for setting at least one of the particle size segregation and the component segregation as a target value, wherein
the guidance information includes at least one setting value from among a mixing ratio of the carbon-containing raw material, a particle size of the carbon-containing raw material, the moisture content, a pallet speed, a sub-gate opening degree, and a chute angle.

### (Advantageous Effect)

The method for managing operation of sintering machine, the method for manufacturing sintered ore, and the control unit according to the present disclosure can estimate particle size segregation and component segregation in the raw material charging layer even in a case in which the mixing conditions for the raw material or the moisture content during granulation differ.

### BRIEF DESCRIPTION OF THE DRAWINGS

In the accompanying drawings:
FIG. 1 is a diagram schematically illustrating an example configuration of a sintering facility according to an embodiment of the present disclosure;
FIG. 2 is a diagram schematically illustrating an example configuration of a control unit according to an embodiment of the present disclosure;
FIG. 3 is a flowchart illustrating an example of procedures in a method for managing operation of a sintering machine according to an embodiment of the present disclosure;
FIG. 4 is a diagram illustrating the particle size distribution of granulated particles and the actual values of the carbon concentration at each particle size in the Examples;
FIG. 5 is a diagram illustrating the correlation between actual values and estimated values in the Examples;
FIG. 6 is a diagram illustrating an example of a charging estimation model in the Examples;
FIG. 7 is a graph illustrating the correlation between calculated yield and actual yield in the Examples; and
FIG. 8 is a diagram illustrating operation of the sintering machine in the Examples.

### DETAILED DESCRIPTION

Embodiments of the present disclosure will be described below, with reference to the drawings.

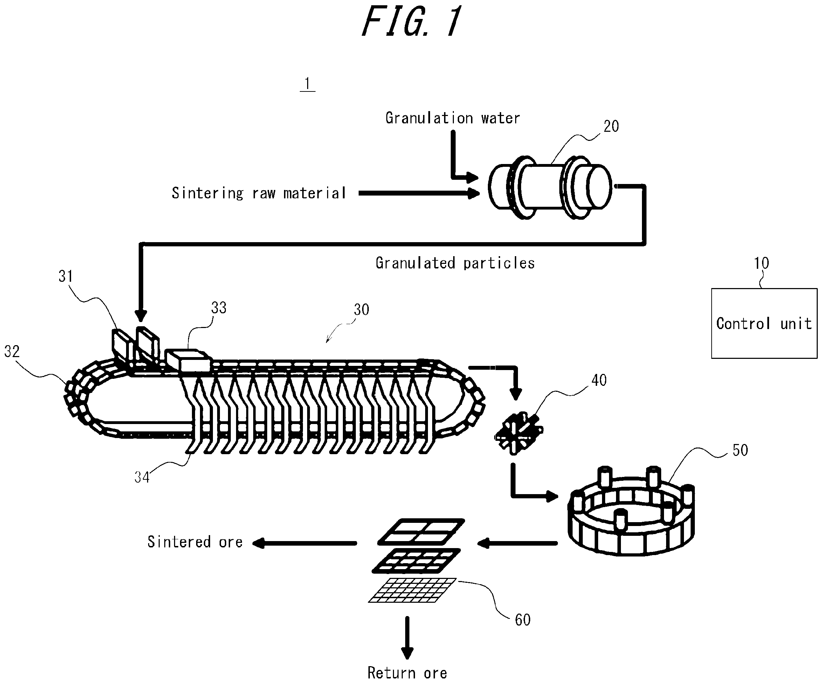

FIG. 1 is a diagram schematically illustrating an example configuration of a sintering facility 1 according to an embodiment of the present disclosure. The sintering facility 1 is a facility capable of manufacturing sintered ore from sintering raw material that includes an iron-containing raw material and a carbon-containing raw material.

The sintering facility 1 includes a control unit 10, a granulator 20, a sintering machine 30, a crusher 40, a cooler 50, and a sieving apparatus 60.

The control unit 10 can communicate with the granulator 20, the sintering machine 30, the crusher 40, the cooler 50, and the sieving apparatus 60. The control unit 10 controls the granulator 20, the sintering machine 30, the crusher 40, the cooler 50, and the sieving apparatus 60.

Details on the configuration and functions of the control unit 10 are described below.

The granulator 20 produces granulated particles from sintering raw material that includes an iron-containing raw material and a carbon-containing raw material. When the granulator 20 produces granulated particles, granulation water is added to the sintering raw material. The sintering raw material may further include a calcium oxide (CaO)-containing raw material as a secondary material. The granulated particles produced by the granulator 20 are conveyed to the sintering machine 30.

The granulator 20 may be any granulator capable of producing granulated particles, such as a drum mixer.

The sintering machine 30 may be any sintering machine that sinters granulated particles, such as a Dwight-Lloyd sintering machine. The sintering machine 30 includes a sintering raw material supply apparatus 31, a pallet 32, an ignition furnace 33, and a wind box 34.

The sintering raw material supply apparatus 31 charges the granulated particles supplied from the granulator 20 onto the pallet 32.

The pallet 32 is an endless moving pallet. When the pallet 32 is charged with granulated particles from the sintering raw material supply apparatus 31, a raw material charging layer is formed on the pallet 32.

The ignition furnace 33 ignites the carbon-containing raw material contained in the surface layer of the raw material charging layer formed on the pallet 32.

The wind box 34 sucks air downward from the raw material charging layer formed on the pallet 32. When the air on the raw material charging layer is sucked downward by the wind box 34, the combustion and molten material in the raw material charging layer move downward in the raw material charging layer. Such movement of the combustion and molten material in the raw material charging layer causes the raw material charging layer to be sintered. As a result, a sinter cake is obtained from the raw material charging layer.

The crusher 40 crushes the sinter cake supplied from the sintering machine 30. The crusher 40 supplies the crushed sinter cake to the cooler 50.

The cooler 50 cools the crushed sinter cake supplied from the crusher 40. The crushed sinter cake, cooled by the cooler 50, is supplied to the sieving apparatus 60.

The sieving apparatus 60 sieves the crushed sinter cake cooled by the cooler 50 according to the particle size of the crushed material. For example, the sieving apparatus 60 sieves the crushed sinter cake into sintered ore with a particle size of 5 mm or more and return ore with a particle size of less than 5 mm.

Sintered ore is thus ultimately manufactured as a result of sieving by the sieving apparatus 60. The return ore sieved by the sieving apparatus 60 may be mixed with the sintering raw material and used again as a raw material for sintered ore.

The configuration and functions of the control unit 10 are described next. First, an overview of the functions of the control unit 10 is provided.

The control unit 10 acquires raw material information, which is information about the raw materials included in the sintering raw material supplied to the granulator 20.

The control unit 10 acquires granulation conditions including the moisture content of the sintering raw material when the granulator 20 produces granulated particles from the sintering raw material.

The control unit 10 estimates the granulation results for the granulated particles produced by the granulator 20 based on the acquired raw material information and granulation conditions. The granulation results estimated by the control unit 10 include the particle size of the granulated particles and the chemical composition at each particle size of the granulated particles.

The control unit 10 acquires charging conditions for when the sintering raw material supply apparatus 31 charges the granulated particles onto the pallet 32 to form a raw material charging layer.

Based on the estimated granulation results and the acquired charging conditions, the control unit 10 estimates the particle size segregation and the component segregation of the granulated particles in the height direction of the raw material charging layer formed on the pallet 32.

The control unit 10 acquires guidance information, including a setting value for setting at least one of the estimated particle size segregation and component segregation as a target value. The guidance information includes at least one setting value from among the mixing ratio of the carbon-containing raw material, the particle size of the carbon-containing raw material, the mixing ratio of the CaO-containing raw material, the moisture content at the time of granulation, the occupation in the granulator 20, the rotational speed of the granulator 20, the speed of the pallet 32, the sub-gate opening degree, and the chute angle.

The configuration of the control unit 10 is described next.

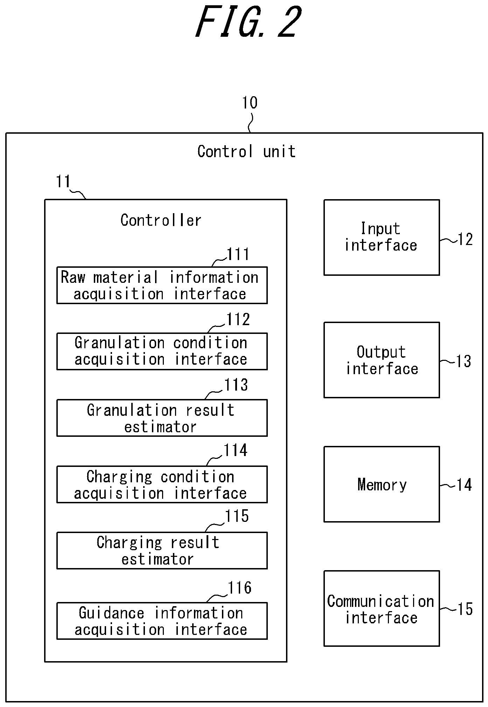

FIG. 2 is a diagram schematically illustrating an example configuration of the control unit 10 according to an embodiment of the present disclosure. The control unit 10 may be a general-purpose computer, such as a workstation or personal computer, or may be a dedicated computer configured to function as the control unit 10 of the sintering facility 1.

The control unit 10 includes a controller 11, an input interface 12, an output interface 13, a memory 14, and a communication interface 15.

The controller 11 includes at least one processor, at least one dedicated circuit, or a combination thereof. The processor is a general-purpose processor such as a Central Processing Unit (CPU) or a Graphics Processing Unit (GPU), or a dedicated processor that is dedicated to specific processing. Examples of dedicated circuits include a Field-Programmable Gate Array (FPGA) and an Application Specific Integrated Circuit (ASIC).

The controller 11 reads programs, data, and the like stored in the memory 14 and executes various functions. The controller 11 controls the granulator 20, the sintering machine 30, the crusher 40, the cooler 50, and the sieving apparatus 60.

The controller 11 can function as a raw material information acquisition interface 111, a granulation condition acquisition interface 112, a granulation result estimator 113, a charging condition acquisition interface 114, a charging result estimator 115, and a guidance information acquisition interface 116 by executing a program read from the memory 14.

The processes performed by the raw material information acquisition interface 111, the granulation condition acquisition interface 112, the granulation result estimator 113, the charging condition acquisition interface 114, the charging result estimator 115, and the guidance information acquisition interface 116 are described below.

The input interface 12 includes one or more interfaces for input to detect user input and acquire input information based on user operations. For example, the input interface 12 includes a physical key, a capacitive key, a touch screen integrally provided with a display of the output interface 13, or a microphone that accepts voice input.

The output interface 13 includes one or more interfaces for output to output information and notify the user. For example, the output interface 13 includes a display for outputting information in the form of images or a speaker for outputting information in the form of audio. The display included in the output interface 13 may, for example, be a Liquid Crystal Display (LCD), a Cathode Ray Tube (CRT) display, or the like.

The memory 14 is, for example, a flash memory, a hard disk, an optical memory, or the like. A portion of the memory 14 may be external to the control unit 10. In this case, the portion of the memory 14 may be a hard disk, a memory card, or the like connected to the control unit 10 by any interface.

The memory 14 stores programs for the controller 11 to perform each function, data used by the programs, and the like.

The communication interface 15 includes at least one of a communication module compatible with wired communication and a communication module compatible with wireless communication. The control unit 10 can communicate with other terminal apparatuses and the like via the communication interface 15.

Next, the processes performed by the raw material information acquisition interface 111, the granulation condition acquisition interface 112, the granulation result estimator 113, the charging condition acquisition interface 114, the charging result estimator 115, and the guidance information acquisition interface 116 are described.

The raw material information acquisition interface 111 acquires raw material information, which is information about the raw materials included in the sintering raw material supplied to the granulator 20. The raw material information includes the particle size, the chemical composition, and the mixing ratio of each raw material included in the sintering raw material. For example, in a case in which the sintering raw material includes an iron-containing raw material, a CaO-containing raw material, and a carbon-containing raw material, the raw material information includes the particle size, the chemical composition, and the mixing ratio for each of the iron-containing raw material, the CaO-containing raw material, and the carbon-containing raw material. The iron-containing raw material may, for example, be iron ore. The CaO-containing raw material may, for example, be limestone. The carbon-containing raw material may, for example, be coke breeze.

The particle size of each raw material may include the content ratio of each predetermined particle size classification. The chemical composition of each raw material may, for example, include at least one of the carbon (C) concentration, the moisture concentration, the calcium oxide (CaO) concentration, and the aluminum oxide (Al₂O₃) concentration.

The raw material acquisition information interface 111 may acquire the raw material information via an input operation by an operator to the input interface 12. The operator can acquire the raw material information in advance by sieving, chemical analysis, or the like for each raw material. The raw material information acquisition interface 111 may also acquire the raw material information by receiving, via the communication interface 15, raw material information entered by the operator on another terminal apparatus.

The raw material information acquisition interface 111 outputs the acquired raw material information to the granulation condition acquisition interface 112.

The granulation condition acquisition interface 112 acquires granulation conditions including the moisture content of the sintering raw material when the granulator 20 produces granulated particles from the sintering raw material. The granulation condition acquisition interface 112 may acquire the granulation conditions from the granulator 20 or may acquire the granulation conditions via an input operation by an operator to the input interface 12. The moisture content of the sintering raw material when the granulator 20 produces granulated particles from the sintering raw material is determined from the moisture content of each raw material included in the sintering raw material and the granulation water added to the granulator 20. The moisture content of each raw material can also, for example, be measured using an infrared moisture meter.

It suffices for the granulation conditions acquired by the granulation condition acquisition interface 112 to include the moisture content of the sintering raw material when the granulator 20 produces granulated particles from the sintering raw material, but the granulation conditions may further include other conditions set when the granulator 20 produces granulated particles from the sintering raw material. For example, the granulation conditions may further include the occupation in the granulator 20, the rotational speed of the granulator 20, and the residence time.

The granulation condition acquisition interface 112 outputs the granulation conditions, and the raw material information acquired from the raw material information acquisition interface 111, to the granulation result estimator 113.

The granulation result estimator 113 estimates the granulation results for the granulated particles produced by the granulator 20 based on the raw material information and granulation conditions acquired from the granulation condition acquisition interface 112. The granulation results estimated by the control unit 10 include the particle size of the granulated particles and the chemical composition at each particle size of the granulated particles.

When estimating the granulation results, the granulation result estimator 113 uses a granulation estimation model that includes a particle size estimation model and a component estimation model. The particle size estimation model and the component estimation model may be stored in the memory 14.

The particle size estimation model is a trained machine learning model that takes, as input, granulation conditions including the mixing ratio of each raw material included in the sintering raw material and the moisture content of the sintering raw material at the time of granulation and outputs the content of the granulated particles in one particle size classification among a plurality of particle size classifications yielded by classifying the particle size of the granulated particles.

The granulation result estimator 113 can estimate the content of granulated particles in one particle size classification by inputting the mixing ratio of each raw material and the granulation conditions, including the moisture content of the sintering raw material at the time of granulation, into a particle size estimation model read from the memory 14.

The content of granulated particles in one particle size classification is an example of the particle size of granulated particles. The particle size of granulated particles may be expressed by other indices.

The particle size classification may, for example, have three levels. In the case of three levels, the particle size may, for example, be classified as over 8 mm, at least 2.8 mm and at most 8.0 mm, and less than 2.8 mm. The particle size classification is not limited to three levels, and classification into a greater number of levels may be adopted.

The granulation result estimator 113 can repeat the same process for other particle size classifications to estimate the content of granulated particles in each particle size classification. The granulation result estimator 113 can then determine the particle size distribution of granulated particles by estimating the content of granulated particles in all particle size classifications.

The component estimation model is a trained machine learning model that takes, as input, granulation conditions including the mixing ratio of each raw material and the moisture content of the sintering raw material at the time of granulation and outputs the content of a specific component of the granulated particles in one particle size classification among a plurality of particle size classifications yielded by classifying the particle size of the granulated particles.

The granulation result estimator 113 can estimate the content of a specific component of the granulated particles in one particle size classification by inputting the mixing ratio of each raw material and the granulation conditions, including the moisture content of the sintering raw material at the time of granulation, into a component estimation model read from the memory 14.

The granulation result estimator 113 can repeat the same process for other particle size classifications to estimate the content of the specific component of the granulated particles in each particle size classification. The granulation result estimator 113 can then determine the content of the specific component of the granulated particles by estimating the content of the specific component of the granulated particles in all particle size classifications.

The granulation result estimator 113 outputs the estimated content of the granulated particles in each particle size classification and the content of a specific component of the granulated particles in each particle size classification to the charging result estimator 115.

The particle size estimation model and the component estimation model may be generated in advance by machine learning using a large number of data sets each formed by inputted values and outputted actual values, and the models may be stored in the memory 14.

The input to the particle size estimation model and the component estimation model may include the particle size of other raw materials. The input to the particle size estimation model and the component estimation model may include granulation conditions such as the rotational speed and residence time of the granulator 20.

The case in which machine learning models are used as the particle size estimation model and the component estimation model has been described, but the particle size estimation model and the component estimation model may be multiple regression models. In this case, the inputs in the machine learning model become the explanatory variables in the multiple regression model, and the outputs in the machine learning model become the objective variables in the multiple regression model. In the multiple regression model as well, each parameter of the multiple regression model may be calculated in advance using a large number of data sets each formed by inputted values and outputted actual values, and the parameters may be stored in the memory 14.

In a case in which the particle size estimation model and the component estimation model are machine learning models, the particle size estimation model and the component estimation model may be updated by machine learning using later acquired data sets. In a case in which the particle size estimation model and the component estimation models are multiple regression models, each parameter of the multiple regression models may be updated using later acquired data sets.

The charging condition acquisition interface 114 acquires charging conditions for when the sintering raw material supply apparatus 31 charges the granulated particles onto the pallet 32 to form a raw material charging layer. The charging condition acquisition interface 114 may acquire the charging conditions from the sintering machine 30 or may acquire the charging conditions via an input operation by an operator to the input interface 12.

The charging conditions acquired by the charging condition acquisition interface 114 may, for example, include the speed of the pallet 32, the opening degree of a sub-gate included in the sintering raw material supply apparatus 31, and the angle of a chute included in the sintering raw material supply apparatus 31.

The charging condition acquisition interface 114 outputs the acquired charging conditions to the charging result estimator 115.

The memory 14 stores a table indicating, for each particle size distribution of the granulated particles and charging condition, the content ratio of the granulated particles of each particle size in each charging classification yielded by dividing the height direction of the raw material charging layer into a plurality of charging classifications. In the present embodiment, the table indicating the content ratio of the granulated particles of each particle size in each charging classification is an example of a charging estimation model.

Upon acquiring the granulation results of the granulated particles from the granulation result estimator 113 and acquiring the charging conditions from the charging condition acquisition interface 114, the charging result estimator 115 reads, from the memory 14, the table that indicates the content ratio of the granulated particles of each particle size in each charging classification yielded by dividing the height of the raw material charging layer into a plurality of charging classifications, the table corresponding to the particle size distribution and charging conditions. Here, the granulation results of the granulated particles as acquired from the granulation result estimator 113 refer to the content of the granulated particles in each particle size classification of the granulated particles and the content of a specific component of the granulated particles in each particle size classification of the granulated particles.

The content ratio of the granulated particles of each particle size in each charging classification, yielded by dividing the height direction of the raw material charging layer into a plurality of charging classifications, can be calculated in advance for each charging classification by running a simulation that simulates the sintering raw material supply apparatus 31 of the sintering machine 30 using the Discrete Element Method (DEM). A table calculated in this manner may be stored in advance in the memory 14.

The DEM is a method that calculates the force exerted on granulated particles when the granulated particles distributed in an estimated particle size distribution collide with each other and calculates the behavior of the granulated particles at each predetermined time interval over the analysis time based on the calculated force.

In the DEM, in addition to the particle size distribution of the granulated particles, the speed of the pallet 32, the opening degree of the sub-gate included in the sintering raw material supply apparatus 31, and the angle of the chute included in the sintering raw material supply apparatus 31, the following are used as input information: the spring constant between the granulated particles, the spring constants in the tangential direction and normal direction between the granulated particles and wall elements (the pallet 32, chute, and granulator 20), and the friction coefficients (static friction and rolling friction) between the granulated particles and the wall elements.

For the speed of the pallet 32, the opening degree of the sub-gate included in the sintering raw material supply apparatus 31, and the angle of the chute included in the sintering raw material supply apparatus 31, data from operations on actual equipment can be used. The various constants are set so that the experimental values of the angle of repose at a plurality of raw material mixtures and moisture contents are consistent with the values calculated by DEM.

Granulated particles that have average particle size are the most numerous, and the number of granulated particles of a certain particle size decreases as that particle size is farther from the average particle size. Therefore, the particle size classification of the granulated particles may be narrowed in particle size classifications close to the average particle size. This can reduce the difference in the number of granulated particles included in each particle classification. Narrowing the overall scope of the particle size classification increases the calculation load, but narrowing only the scope of the particle size classification near the average particle size enables acquisition of more detailed charging data while suppressing an increase in calculation load.

Based on the granulation results acquired from the granulation result estimator 113 and the charging conditions acquired from the charging condition acquisition interface 114, the charging result estimator 115 estimates the particle size segregation and the component segregation of the granulated particles in the height direction of the raw material charging layer formed on the pallet 32.

The charging result estimator 115 estimates the particle size segregation of the granulated particles in the height direction of the raw material charging layer using the table indicating the content ratio of the granulated particles of each particle size in each charging classification. Since the chemical composition for each particle size of the granulated particles is estimated by the granulation result estimator 113, the charging result estimator 115 can estimate the component segregation of the granulated particles in the height direction of the raw material charging layer based on the particle size segregation of the granulated particles in the height direction of the raw material charging layer and the component composition of each particle size in each charging classification.

The charging result estimator 115 may estimate the particle size segregation and the component segregation of the granulated particles in charging classifications divided not only in the height direction of the raw material charging layer but also in the width direction of the raw material charging layer. In this case, a table indicating the content ratio of the granulated particles of each particle size in each charging classification, divided not only in the height direction but also in width direction of the raw material charging layer, is stored in the memory 14.

The table indicating the content ratio of the granulated particles of each particle size in each charging classification is an example of a charging estimation model. A trained machine learning model or a multiple regression model that takes, as input, the content, chemical composition, and charging conditions of the granulated particles of each particle size classification and outputs the content ratio of the granulated particles of each particle size in each charging classification may be used as a charging estimation model.

The guidance information acquisition interface 116 acquires guidance information, including a setting value for setting, as a target value, at least one of the particle size segregation and the component segregation estimated by the charging result estimator 115. The guidance information may include at least one setting value from among the mixing ratio of the carbon-containing raw material, the particle size of the carbon-containing raw material, the mixing ratio of the CaO-containing raw material, the moisture content at the time of granulation, the occupation in the granulator 20, the rotational speed of the granulator 20, the speed of the pallet 32, the sub-gate opening degree, and the chute angle. Of these setting values, the particle size of the carbon-containing raw material can be controlled by changing the throughput of a rod mill. The occupation in the granulator 20 can be controlled by changing the amount of sintering raw material conveyed to the granulator 20.

The target value for at least one of the particle size segregation and the component segregation is determined on the condition that the quality of the sintered ore manufactured by the sintering facility 1 satisfies a predetermined quality of sintered ore. Specifically, a yield estimation model (quality estimation model) that takes at least one of the particle size segregation and the component segregation as input and that outputs the yield of sintered ore is constructed, and the yield of sintered ore (quality of sintered ore) is estimated by inputting various particle size segregations and component segregations to the yield estimation model. It is determined whether the outputted yield of the sintered ore exceeds the target value, and if so, the particle size segregation and component segregation that were inputted at that time are identified as the target values. A trained machine learning model or multiple regression model may be used as the yield estimation model.

The yield of the sintered ore is an example of the quality of the sintered ore. The yield of the sintered ore may, for example, be a value calculated by Equation (1) below. (mass of sintered ore with a particle size of 5 mm or more × 100)/(mass of sintered ore with a particle size of 5 mm or more + mass of return ore with a particle size of less than 5 mm)

The strength of the sintered ore, the reducibility of the sintered ore, or the like may be used instead of the yield of the sintered ore as the quality of the sintered ore.

Upon identifying the target value of at least one of the particle size segregation and the component segregation, the guidance information acquisition interface 116 back-calculates the charging estimation model and the granulation estimation model to acquire at least one setting value that can achieve the target value from among the mixing ratio of the carbon-containing raw material, the particle size of the carbon-containing raw material, the mixing ratio of the CaO-containing raw material, the moisture content at the time of granulation, the occupation in the granulator 20, the rotational speed of the granulator 20, the speed of the pallet 32, the sub-gate opening degree, and the chute angle.

Upon acquiring at least one setting value from among the mixing ratio of the carbon-containing raw material, the particle size of the carbon-containing raw material, the mixing ratio of the CaO-containing raw material, the moisture content at the time of granulation, the occupation in the granulator 20, the rotational speed of the granulator 20, the speed of the pallet 32, the sub-gate opening degree, and the chute angle, the guidance information acquisition interface 116 outputs the acquired setting value to the output interface 13.

The output interface 13 outputs the setting value acquired from the guidance information acquisition interface 116. For example, in a case in which the output interface 13 includes a display, the output interface 13 displays the setting value acquired from the guidance information acquisition interface 116 on the display.

The operator, having viewed the setting value displayed on the display, can adjust the setting value and operate the sintering facility 1 to manufacture sintered ore at the target particle size segregation and component segregation.

Alternatively, the guidance information acquisition interface 116 may automatically set the calculated setting values as the setting values for operating the sintering facility 1. This enables the sintering facility 1 to automatically manufacture sintered ore with the target particle size segregation and composition segregation. This enables the manufacturing of sintered ore that satisfies the target quality.

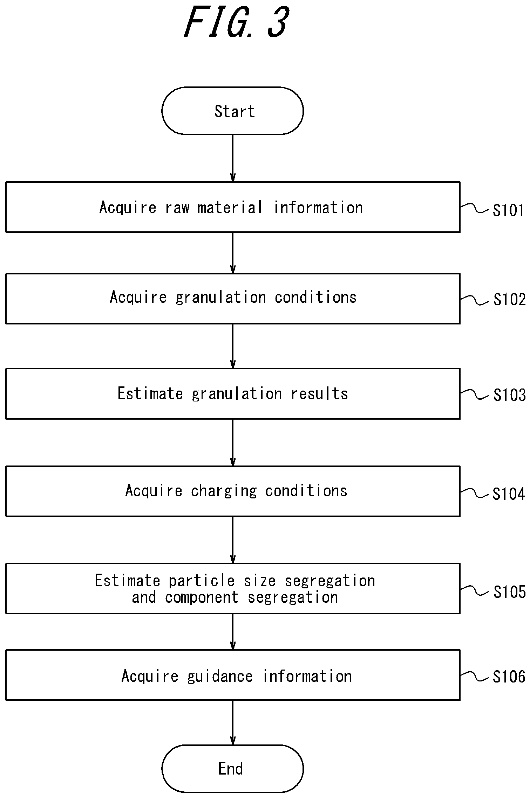

Referring to the flowchart illustrated in FIG. 3, the method for managing operation of the sintering machine 30 as performed by the sintering facility 1 according to the present embodiment is described.

In step S101, the controller 11 of the control unit 10 acquires raw material information including the particle size, the chemical composition, and the mixing ratio of each raw material included in the sintering raw material.

In step S102, the controller 11 acquires granulation conditions including the moisture content of the sintering raw material when the granulator 20 produces granulated particles from the sintering raw material.

In step S103, the controller 11 estimates granulation results including the particle size of the granulated particles and the chemical composition at each particle size of the granulated particles based on the acquired raw material information and granulation conditions.

In step S104, the controller 11 acquires charging conditions for when the granulated particles are charged into the sintering machine 30 to form a raw material charging layer.

In step S105, based on the estimated granulation results and the acquired charging conditions, the controller 11 estimates the particle size segregation and the component segregation of the granulated particles in the height direction of the raw material charging layer.

In step S106, the controller 11 acquires guidance information, including a setting value for setting at least one of the estimated particle size segregation and component segregation as a target value. The guidance information may include at least one setting value from among the mixing ratio of the carbon-containing raw material, the particle size of the carbon-containing raw material, the mixing ratio of the CaO-containing raw material, the moisture content at the time of granulation, the occupation in the granulator 20, the rotational speed of the granulator 20, the speed of the pallet 32, the sub-gate opening degree, and the chute angle. The controller 11 may output the acquired guidance information to the output interface 13 for display by the output interface 13.

### EXAMPLES

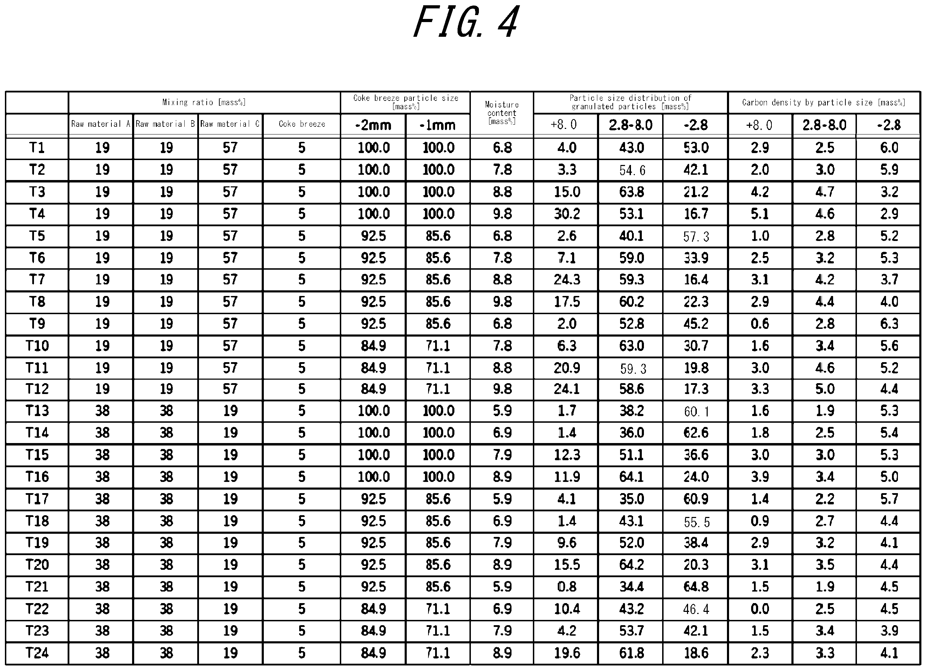

Referring to FIGS. 4 to 8, Examples of the method for managing operation of the sintering machine 30 in the sintering facility 1 according to the present embodiment are described.

FIG. 4 is a table illustrating actual values of the particle size distribution of granulated particles and the carbon concentration for each particle size when granulated particles were manufactured under various conditions.

As illustrated in FIG. 4, measurements were performed under 24 conditions from T1 to T24. FIG. 4 illustrates the mixing ratio, the coke breeze particle size, and the moisture content during granulation as conditions. The particle size distribution of the granulated particles and the carbon concentration for each particle size are also illustrated as actual values.

In the mixing ratios illustrated in FIG. 4, the raw material A is iron ore from South America. The raw material B is a different brand of iron ore from South America than the raw material A. The raw material C is iron ore from Australia. In the coke breeze particle size, "-2 mm" indicates the percentage of coke breeze with a diameter of less than 2 mm, and "-1 mm" indicates the percentage of coke breeze with a diameter of less than 1 mm. In the particle size distribution for granulated particles, "+8.0" indicates the percentage of granulated particles with a diameter greater than 8.0 mm. The range "2.8 - 8.0" indicates the percentage of granulated particles with a diameter of at least 2.8 mm and at most 8.0 mm, and "-2.8" indicates the percentage of granulated particles with a diameter of less than 2.8 mm. In the carbon concentration for each particle size, "+8.0" indicates the concentration of carbon with a diameter greater than 8.0 mm. The range "2.8 - 8.0" indicates the concentration of carbon with a diameter of at least 2.8 mm and at most 8 mm, and "-2.8" indicates the concentration of carbon with a diameter of less than 2.8 mm.

A particle size estimation model and a component estimation model were generated using the actual values illustrated in FIG. 4, and these models were used to estimate the content of granulated particles in each particle size classification and the carbon concentration for each particle size. In this case, two types of estimations were made, one using a machine learning model and the other using a multiple regression model.

In the case of estimation using a machine learning model, a particle size estimation model and a component estimation model were used for estimation. For the particle size estimation model, a model that takes, as inputs, the particle size of coke breeze, the mixing ratio of the sintering raw material, and the moisture content during granulation and that outputs the content of granulated particles in each particle size classification was used. For the component estimation model, a model that takes, as inputs, the particle size of coke breeze, the mixing ratio of the sintering raw material, and the moisture content during granulation and that outputs the carbon concentration for each particle size was used.

In the case of estimation using a multiple regression model, the particle size estimation model was a model in which the particle size of coke breeze, the mixing ratio of the sintering raw material, and the moisture content during granulation are the explanatory variables and the content of granulated particles in each particle size classification is the objective variable. The component estimation model was a model in which the particle size of coke breeze, the mixing ratio of the sintering raw material, and the moisture content during granulation are the explanatory variables and the carbon concentration for each particle size is the objective variable.

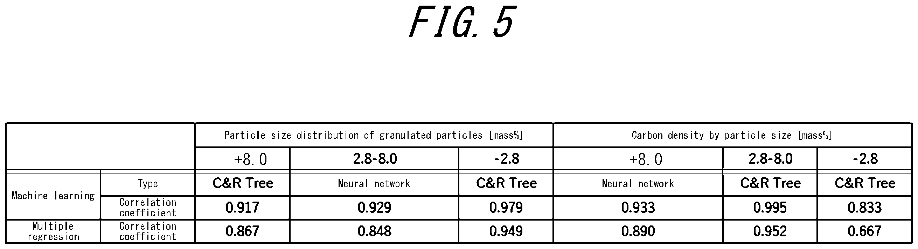

FIG. 5 is a table illustrating the correlation coefficients between the estimated values and actual values in the cases of estimation using a machine learning model and estimation using a multiple regression model. In the case of using a machine learning model, the correlation coefficients for the case of using a neural network and the correlation coefficients for the case of using a Classification and Regression Tree (C&R) Tree are illustrated.

As is clear from FIG. 5, the correlation coefficients are high for all models, confirming that the control unit 10 can estimate the particle size of granulated particles and the component concentration of a specific component for each particle size with high accuracy.

Furthermore, a comparison between the correlation coefficients in the case of using a machine learning model with the correlation coefficients in the case of using a multiple regression model indicates that the correlation coefficients in the case of using a machine learning model were generally larger, confirming that the use of machine learning enables estimation of the particle size of granulated particles and the carbon concentration for each particle size with higher accuracy.

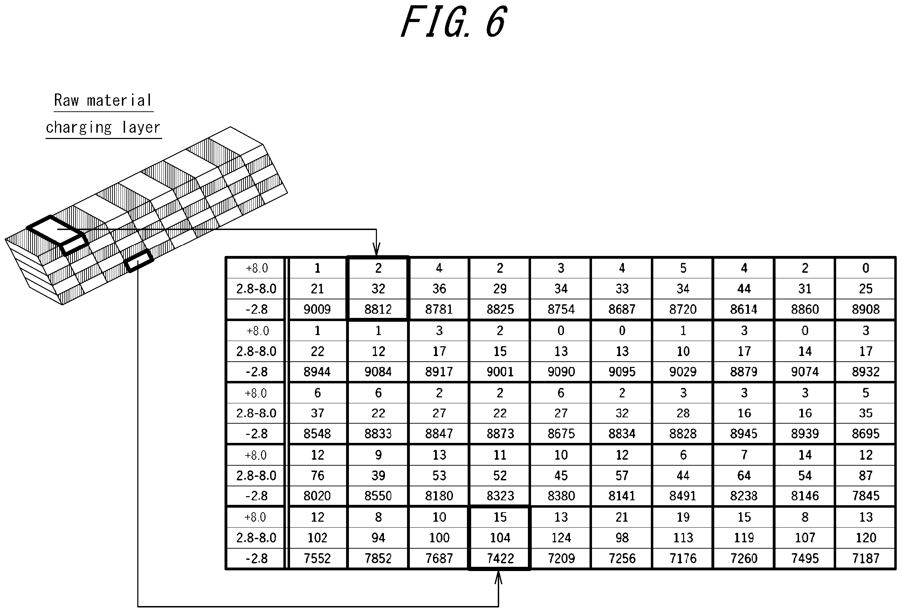

FIG. 6 is a diagram illustrating an example of a charging estimation model. The charging estimation model is a table indicating the content ratio of the granulated particles of each particle size in each charging classification.

FIG. 6 illustrates the content ratio of granulated particles of each particle size in each charging classification of the raw material charging layer. The particle sizes of the granulated particles are indicated by three classifications, "+8.0", "2.8 to 8.0", and "-2.8", where "+8.0" indicates that the particle size of the granulated particles is greater than 8.0 mm, "2.8 to 8.0" indicates that the particle size of the granulated particles is at least 2.8 mm and at most 8.0 mm, and "-2.8" indicates that the particle size of the granulated particles is less than 2.8 mm.

The table illustrated in FIG. 6 is generated by performing DEM simulations for each particle size distribution and charging condition of granulated particles. The generated table indicating the content ratio of the granulated particles of each particle size in each charging classification is stored in the memory 14.

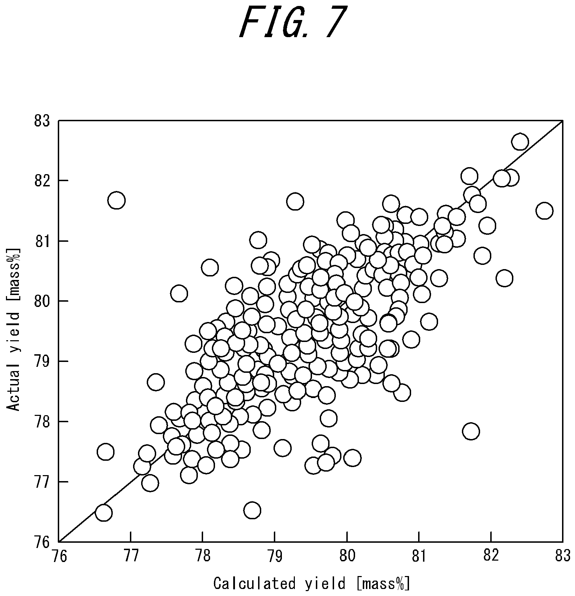

FIG. 7 is a graph illustrating the correlation between the calculated yield, estimated by machine learning using the particle size segregation, and the actual yield. As illustrated in FIG. 7, it was confirmed that the particle size segregation can be used to estimate the yield of sintered ore with high accuracy.

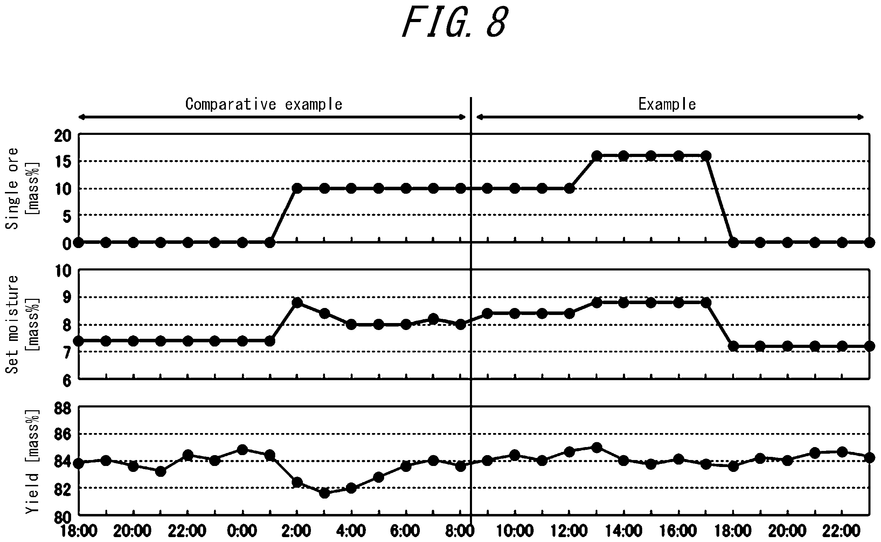

FIG. 8 is a diagram illustrating operation of the sintering machine 30. In FIG. 8, the section indicated as "Comparative Example" is the result of operating the sintering machine 30 based on the existing operation policy. The section indicated as "Example" is the result of the operating the sintering machine 30 after acquiring the guidance information described in the present embodiment.

During the operational test illustrated in FIG. 8, single fine ore was mixed with the base mixing raw material, and the mixing rate was increased stepwise. The single ore was finer than the base mixing raw material.

During the operation period for the Comparative Example, the moisture content during granulation was increased because granulation performance is expected to deteriorate as a result of the mixing of fine, single raw material. However, the yield was greatly reduced due to heat loss caused by the added moisture.

By contrast, during the period for the Example, the particle size segregation was estimated using the granulation estimation model and the charging estimation model. The target value at which the particle size segregation satisfies the target yield of sintered ore was then identified, the setting value of the moisture content during granulation for the particle size segregation to become the target value was determined, and sintered ore was manufactured using this setting value. This approach suppressed the decline in the yield of sintered ore and enabled manufacturing of sintered ore while maintaining a high yield.

As described above, in the method for managing operation of the sintering machine 30 according to the present embodiment and the control unit 10 according to the present embodiment, the control unit 10 acquires raw material information including information on the particle size, the chemical composition, and the mixing ratio of each raw material included in the sintering raw material, acquires granulation conditions including the moisture content of the sintering raw material when granulated particles are produced from the sintering raw material, estimates granulation results including the particle size of the granulated particles and the chemical composition at each particle size of the granulated particles based on the raw material information and the granulation conditions, acquires charging conditions for when the granulated particles are charged into the sintering machine 30 to form a raw material charging layer, and estimates charging results by estimating the particle size segregation and the component segregation of the granulated particles in the height direction of the raw material charging layer based on the granulation results and the charging conditions. The method for managing operation of the sintering machine 30 according to the present embodiment and the control unit 10 according to the present embodiment thus estimate the particle size segregation or the component segregation of the granulated particles in the height direction of the raw material charging layer based on the raw material information, which includes the mixing ratio of each raw material included in the sintering raw material, and the granulation conditions, which include the moisture content of the sintering raw material at the time of granulation. Therefore, even if the mixing conditions of the raw materials or the moisture content at the time of granulation differ, the particle size segregation or component segregation of granulated particles in the height direction of the raw material charging layer can be estimated.

Furthermore, the guidance information acquisition interface 116 according to the present embodiment acquires guidance information, including a setting value for setting at least one of the particle size segregation and the component segregation as a target value. Here, the guidance information includes at least one setting value from among the mixing ratio of the carbon-containing raw material, the particle size of the carbon-containing raw material, the mixing ratio of the CaO-containing raw material, the moisture content at the time of granulation, the occupation in the granulator 20, the rotational speed of the granulator 20, the speed of the pallet 32, the sub-gate opening degree, and the chute angle, which are manufacturing conditions for sintered ore. With this configuration, the control unit 10 can adjust the sintered ore manufacturing conditions based on guidance information that includes a setting value for setting at least one of the particle size segregation and the component segregation as a target value, in order to manufacture sintered ore that satisfies the target quality. Therefore, the method for managing operation of the sintering machine 30 according to the present embodiment and the control unit 10 according to the present embodiment can estimate the particle size segregation and component segregation in the raw material charging layer and easily reflect the estimated particle size segregation and component segregation in the sintered ore manufacturing conditions. The adjustment of the sintered ore manufacturing conditions based on the guidance information may be performed by an informed operator or may be performed automatically by the control unit 10 according to the present embodiment.

For example, in the case of adjusting manufacturing conditions based on the yield of sintered ore, it has conventionally been impossible to adjust the manufacturing conditions of sintered ore based on yield until after determining the yield by sieving sintered ore with a particle size of 5 mm or more and return ore with a particle size of less than 5 mm using the sieving apparatus 60. By contrast, the method of managing operation of the sintering machine 30 according to the present embodiment can acquire guidance information including the setting values of the manufacturing conditions of sintered ore and adjust the manufacturing conditions of sintered ore based on the guidance information, thereby enabling more rapid adjustment.

The present disclosure is not limited to the embodiments described above. For example, a plurality of blocks described in the block diagrams may be integrated, or a block may be divided. Instead of executing a plurality of steps described in the flowcharts in chronological order in accordance with the description, the plurality of steps may be executed in parallel or in a different order according to the processing capability of the apparatus that executes each step, or as required. Other modifications can be made without departing from the spirit of the present disclosure.

For example, in the above embodiment, the case in which the sintering raw material includes an iron-containing raw material, a CaO-containing raw material, and a carbon-containing raw material has been described as an example. This configuration is not limiting, however. The sintering raw material need only include an iron-containing raw material and a carbon-containing raw material and need not include a CaO-containing raw material. In a case in which the mixing ratio of a CaO-containing raw material is included in the guidance information, however, the sintering raw material does include an iron-containing raw material, a CaO-containing raw material, and a carbon-containing raw material.

Furthermore, in the above embodiment, the case in which the controller 11 has the function of the guidance information acquisition interface 116 has been described as an example. This configuration is not limiting, however, and the controller 11 need not have the function of the guidance information acquisition interface 116. However, if the controller 11 has the function of the guidance information acquisition interface 116, it will be easier to manufacture sintered ore that satisfies the target quality. Hence, the controller 11 preferably has the function of the guidance information acquisition interface 116.

### REFERENCE SIGNS LIST

- 1: Sintering facility
- 10: Control unit
- 11: Controller
- 12: Input interface
- 13: Output interface
- 14: Memory
- 15: Communication interface
- 20: Granulator
- 30: Sintering machine
- 31: Sintering raw material supply apparatus
- 32: Pallet
- 33: Ignition furnace
- 34: Wind box
- 40: Crusher
- 50: Cooler
- 60: Sieving apparatus
- 111: Raw material information acquisition interface
- 112: Granulation condition acquisition interface
- 113: Granulation result estimator
- 114: Charging condition acquisition interface
- 115: Charging result estimator
- 116: Guidance information acquisition interface

## Claims

1. A method for managing operation of a sintering machine that sinters granulated particles produced by adding water to a sintering raw material including an iron-containing raw material and a carbon-containing raw material, the method comprising:
acquiring raw material information including a particle size, a chemical composition, and a mixing ratio of each raw material included in the sintering raw material;
acquiring granulation conditions including a moisture content of the sintering raw material when the granulated particles are produced from the sintering raw material;
estimating granulation results including a particle size of the granulated particles and a chemical composition at each particle size of the granulated particles based on the raw material information and the granulation conditions;
acquiring charging conditions for when the granulated particles are charged into the sintering machine to form a raw material charging layer;
estimating charging results by estimating a particle size segregation and a component segregation of the granulated particles in a height direction of the raw material charging layer based on the granulation results and the charging conditions; and
acquiring guidance information including a setting value for setting at least one of the particle size segregation and the component segregation as a target value, wherein
the guidance information includes at least one setting value from among a mixing ratio of the carbon-containing raw material, a particle size of the carbon-containing raw material, the moisture content, a pallet speed, a sub-gate opening degree, and a chute angle.

2. The method for managing operation of a sintering machine according to claim 1, wherein
in the estimating of the granulation results, the granulation results are estimated using a granulation estimation model that includes
a particle size estimation model that takes, as input, granulation conditions including the particle size of the carbon-containing raw material, the mixing ratio of each raw material included in the sintering raw material, and the moisture content, and outputs a content of the granulated particles in one particle size classification among a plurality of particle size classifications yielded by classifying the particle size of the granulated particles, and
a component estimation model that takes, as input, granulation conditions including the particle size of the carbon-containing raw material, the mixing ratio of each raw material included in the sintering raw material, and the moisture content, and outputs a content of a specific component of the granulated particles in one particle size classification among a plurality of particle size classifications yielded by classifying the particle size of the granulated particles.

3. The method for managing operation of a sintering machine according to claim 1 or 2, wherein the acquiring of the raw material information includes acquiring at least one of a carbon (C) concentration, a moisture concentration, a calcium oxide (CaO) concentration, and an aluminum oxide (Al₂O₃) concentration as the chemical composition.

4. The method for managing operation of a sintering machine according to any one of claims 1 to 3, wherein the estimating of the charging results includes estimating the particle size segregation and the component segregation using a charging estimation model that indicates a content ratio of the granulated particles of each particle size in each charging classification yielded by dividing the height direction of the raw material charging layer into a plurality of charging classifications.

5. The method for managing operation of a sintering machine according to any one of claims 1 to 4, wherein the estimating of the charging results includes estimating the particle size segregation and the component segregation using a charging estimation model that indicates a content ratio of the granulated particles of each particle size in each charging classification yielded by dividing a width direction of the raw material charging layer into a plurality of charging classifications.

6. The method for managing operation of a sintering machine according to any one of claims 1 to 5, wherein
the sintering raw material further includes a CaO-containing raw material,
the granulation conditions further include a occupation in a granulator and a rotational speed of the granulator, and
the guidance information includes at least one setting value from among the mixing ratio of the carbon-containing raw material, the particle size of the carbon-containing raw material, a mixing ratio of the CaO-containing raw material, the moisture content, the occupation in the granulator, the rotational speed of the granulator, the pallet speed, the sub-gate opening degree, and the chute angle.

7. The method for managing operation of a sintering machine according to any one of claims 1 to 6, wherein
a target value of the particle size segregation and the component segregation is calculated on a condition that quality of sintered ore as estimated by a quality estimation model satisfies a predetermined quality, and
in the quality estimation model, at least one of the particle size segregation and the component segregation is included in input data, and output data is the quality of the sintered ore.

8. The method for managing operation of a sintering machine according to claim 7, wherein the quality estimation model is updated based on at least one of the particle size segregation and the component segregation acquired during sintering machine operations conducted after the quality estimation model is generated, and based on an actual value of the quality of the sintered ore.

9. A method for manufacturing sintered ore, comprising manufacturing sintered ore using, as manufacturing conditions for the sintered ore, guidance information acquired in the method for managing operation of a sintering machine according to any one of claims 1 to 8.

10. A control unit for controlling a sintering machine that sinters granulated particles produced by adding water to a sintering raw material including an iron-containing raw material and a carbon-containing raw material, the control unit comprising:
a raw material information acquisition interface configured to acquire raw material information including a particle size, a chemical composition, and a mixing ratio of each raw material included in the sintering raw material;
a granulation condition acquisition interface configured to acquire granulation conditions including a moisture content of the sintering raw material when the granulated particles are produced from the sintering raw material;
a granulation result estimator configured to estimate granulation results including a particle size of the granulated particles and a chemical composition at each particle size of the granulated particles based on the raw material information and the granulation conditions;
a charging condition acquisition interface configured to acquire charging conditions for when the granulated particles are charged into the sintering machine to form a raw material charging layer;
a charging result estimator configured to estimate a particle size segregation and a component segregation of the granulated particles in a height direction of the raw material charging layer based on the granulation results and the charging conditions; and
a guidance information acquisition interface configured to acquire guidance information including a setting value for setting at least one of the particle size segregation and the component segregation as a target value, wherein
the guidance information includes at least one setting value from among a mixing ratio of the carbon-containing raw material, a particle size of the carbon-containing raw material, the moisture content, a pallet speed, a sub-gate opening degree, and a chute angle.
